# DEMANDE DE BREVET EUROPEEN

(11) **EP 0 692 304 A1**
(43) Date de publication de la demande: **17.01.1996**
(21) Numéro de dépôt: 95870074.2
(22) Date de dépôt: 23.06.1995
(51) Int. Cl.: B01J 2/30

(54) **Procédé de traitement de matières poudreuses et produits obtenus**

(30) Priorité: 06.07.1994 BE 9400636; 06.01.1995 BE 9500013
(71) Demandeur: RAFFINERIE TIRLEMONTOISE, B-1150 Bruxelles (BE); STOLZ Société Anonyme, B-1150 Bruxelles (BE)
(72) Inventeur: Lefevre, Jacques, B-1357 Helecine (BE); Willems, Marc, B-3300 Tienen-Vissenaken (BE); Samain, Daniel, B-5530 Mont-Godinne (Yvoir) (BE)
(74) Mandataire: Van Malderen, Joelle

(57) **Abrégé**

La présente invention concerne un procédé de traitement de matières poudreuses sensibles à des phénomènes de mottage, caractérisé en ce que l'on soumet ces matières poudreuses à un traitement par micro-ondes.

La présente invention concerne également le dispositif pour la mise en oeuvre du procédé.

## Description

### Objet de l'invention.

La présente invention se rapporte à un procédé de traitement de matières poudreuses, en vue d'éviter qu'une agglomération desdites matières ne se produise, même à long terme.

La présente invention se rapporte également aux produits obtenus par la mise en oeuvre du procédé.

### Arrière-plan technologique.

De manière générale, on observe que les matières poudreuses constituées de particules présentant une granulométrie faible souffrent d'effets d'agglomération et de prise en masse qui augmentent en fonction du temps.

On observe également que ce phénomène augmente en fonction inverse de la granulométrie, c'est-à-dire que plus la granulométrie est fine, plus le phénomène est accéléré et important.

Ce phénomène d'agglomération et de prise en masse est plus généralement qualifié de mottage.

Par matières poudreuses, on entend aussi bien des matières organiques telles que le sucre, les antibiotiques en poudre, certains colorants, ... que des matières minérales telles que des sels minéraux (NaCl, KCl, CaCl₂), le ciment, les zéolites, ... .

Afin de trouver une explication à ce phénomène de "mottage", la demanderesse s'est plus spécialement intéressée aux phénomènes de prise en masse et d'agglomération du sucre en poudre.

On a observé que pour le sucre, le phénomène de "mottage" des particules se produit lorsqu'on a effectué une opération préalable qui modifie l'arrangement structurel et la stabilité des cristaux, tel un broyage.

On s'intéresse plus particulièrement au sucre broyé très finement, et que l'on appelle dans le commerce "sucre glacé" ou "sucre impalpable" et qui présente une granulométrie moyenne inférieure à 140 µm.

Pour résoudre le problème d'agglomération du sucre en poudre, la solution la plus souvent utilisée consiste à ajouter des additifs qui ont tendance à capter l'humidité ambiante de manière à éviter que le sucre lui-même ne s'humidifie. Ces agents peuvent être de l'amidon, du phosphate de calcium, ...

D'autres solutions ont été proposées, qui consistent à effectuer un traitement de la matière poudreuse provoquant le réarrangement structurel, en vue d'éviter qu'une agglomération du sucre ne se produise lors du réarrangement spontané de la structure du sucre.

Des exemples de procédés de traitement connus dans l'art antérieur sont décrits ci-après en comparaison avec le procédé de l'invention.

Néanmoins, il convient tout d'abord d'expliquer plus en détails, et plus particulièrement pour le cas du sucre, les phénomènes physico-chimiques qui se produisent lors d'un broyage.

D'après le document intitulé "Amorphisierung Bei Der Zerkleinerung und Rekristallisation als Ursachen der Agglomeration von Puderzucker und Verfahren zu Deren Vermeidung" rédigé par Dipl.-Ing. Dieter Roth aus Offenburg en vue de l'obtention d'un grade de Doktor Ingenieurs le 13 février 1976 à la Faculté des Sciences Appliquées Chimie de l'Université de Karlsruhe, on observe que trois étapes successives sont réalisées lors de la réduction par broyage de cristaux de sucre : la formation d'une "structure superficielle amorphe", la recristallisation ou le réarrangement du réseau cristallin de cette "structure superficielle amorphe" et l'agglomération et la prise en masse des particules entre elles (phénomène de mottage).

### 1. Formation d'une "structure superficielle amorphe".

Lors de la réduction (broyage) de gros cristaux (par exemple des cristaux d'environ 600 µm) en cristaux présentant une granulométrie comprise par exemple entre 20 et 70 µm, il se produit des déformations micro-plastiques dans la zone de cassure du réseau cristallin. La température dans la zone de brisure peut, au moment de la cassure, atteindre 2000 °K. Immédiatement après la brisure, la déformation est "gelée" du fait que le réseau cristallin étant bon conducteur, une conduction rapide refroidit la masse.

Le résultat est l'obtention d'une série de cristaux où la surface spécifique est accrue (f = 200) et qui est constituée en grande partie de surfaces brisées. Une certaine partie (± 2%) de ces surfaces brisées est à tel point perturbée (amorphe aux rayons X) que cela confère aux cristaux des propriétés spécifiques en termes d'adsorption de vapeur d'eau provenant de l'air. Les structures amorphes adsorbent l'eau à un taux d'humidité relative (HR) nettement inférieur comparées aux structures cristallines. On nomme ces cristaux des "cristaux amorphes".

Il convient de noter que le degré de réduction (granulométrie) obtenu par le broyage influence les propriétés d'adsorption.

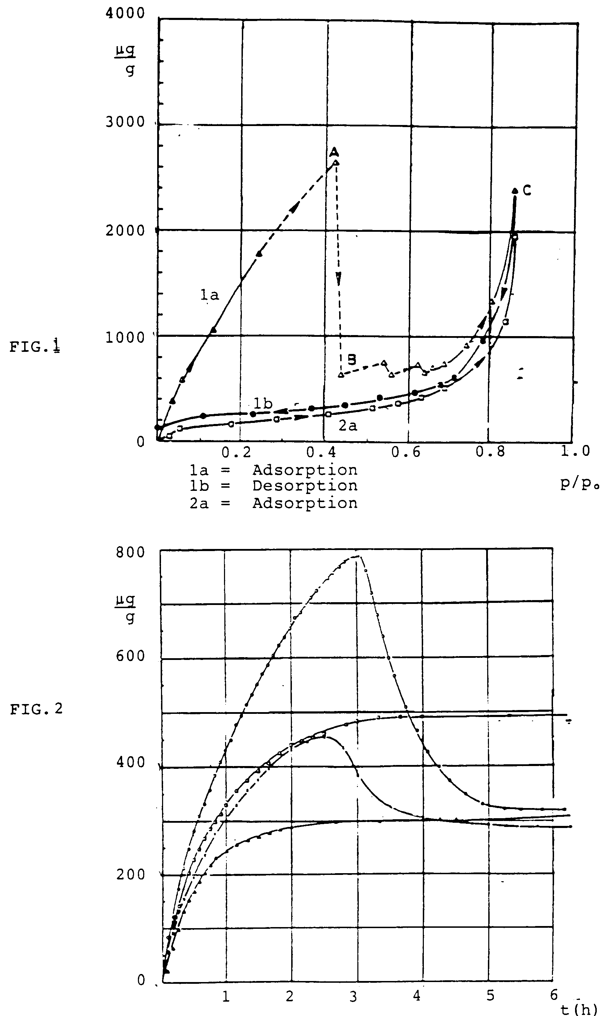

Les propriétés d'adsorption des cristaux amorphes d'un sucre (par exemple broyés sous un taux d'humidité relative (HR) inférieur à 10% et à une température de 20 °C) sont représentées en fonction du degré d'humidité (p/p0) à la figure 1 :
- au début pour p/p0 < 0,4, les cristaux amorphes prennent beaucoup d'eau (courbe d'adsorption 1);
- à partir d'un degré d'humidité déterminé (point de rupture A sur la courbe d'adsorption 1), on observe une libération d'eau;
- enfin (entre les points B et C), il se produit à nouveau une adsorption d'eau pour un degré qui est fonction du taux d'humidité de l'air ambiant.

De manière remarquable, on observe que lorsque ces cristaux sont soumis à une désorption (courbe de désorption 1) et ensuite à un deuxième cycle d'adsorption, ils connaissent un autre comportement d'adsorption qui cette fois-ci peut être assimilé à celui d'un cristal normal. Ceci est la preuve qu'aupoint de rupture A, un réarrangement irréversible au niveau du réseau cristallin se produit. Bien entendu, ces cristaux peuvent à nouveau être soumis à des opérations qui modifient l'arrangement structurel et la stabilité de leur réseau cristallin.

### 2. Recristallisation ou réarrangement de la structure superficielle amorphe.

Les modifications qui se produisent à partir d'un certain degré d'humidité relative (HR) déterminé au niveau du réseau cristallin, peuvent être attribuées à un "réarrangement de la structure superficielle amorphe". En pratique, il se produit un réarrangement de la structure instable à la surface du cristal. Ceci va de pair avec une diminution de la surface spécifique (± 30%).

Ce réarrangement structurel peut se produire :
- à température ambiante dès que le degré d'humidité atteint une valeur déterminée :
   - HR < 15%: : pas de modification
   - 15% < HR < 25%: : modifications très faibles (non mesurables)
   - HR > 25%: : modifications
   HR ≈ 26% : faibles (± 10 heures)
   HR > 35% : apparentes (HR ≈ 50% : 15')
   HR > 80% : particulièrement rapides et primant sur le comportement d'adsorption normal
- sans eau dès que la température ≧ TG : où TG est la température de transition vitreuse et dépend du taux d'humidité.
   Le degré d'émission d'eau lors du réarrangement est fonction de la quantité qui a été auparavant adsorbée par les cristaux amorphes, et par conséquent e. a. du degré "d'amorphicité".
   Une première forme de mise en oauvre de l'art antérieur est basée sur le fait que la recristallisation ou le réarrangement du réseau cristallin est possible grâce à l'adsorption d'eau, qui facilite le réarrangement du réseau cristallin. Dans le cas où le degré d'humidité relative est supérieur à 60%, on observe une dissolution de la couche superficielle et dans le cas où il est inférieur à 60%, on ne parle plus réellement de dissolution mais d'un réarrangement qui se produit grâce à une diminution de la viscosité de la structure superficielle amorphe.
   Selon une autre forme de mise en oeuvre de l'art antérieur, on peut également utiliser une augmentation de la température (70 °C ≦ T ≦ 80 °C) pour accroître la mobilité des molécules du réseau cristallin de la structure superficielle amorphe et atteindre un réarrangement du réseau cristallin.
   Cette technique fait appel à un contrôle particulièrement précis du taux d'humidité relative grâce à un conditionnement de l'air.
   Les deux méthodes de traitement utilisant ces principes sont illustrées à la figure 2. On observe, dans le cas d'un traitement à une température supérieure à 70 °C, que le taux d'humidité du sucre broyé reste encore élevé.

### 3. Agglomération et durcissement.

Lors de la recristallisation, l'eau adsorbée par les structures instables est libérée, de telle sorte que le taux d'humidité de l'air ambiant peut augmenter jusqu'à une valeur au-delà de 90 % et l'humidité va de ce fait se condenser sur les cristaux. Le taux d'humidité est suffisamment élevé pour, via l'intermédiaire des couches superficielles, créer des ponts liquides entre les particules voisines. Les forces capillaires ainsi que la mobilité des couches superficielles jouent un rôle essentiel lors de l'adhésion des particules du cristal entre elles. On parle dans ce cas d'agglomération.

La prise en masse du sucre finement broyé se produit ensuite lorsque les ponts liquides sont "cristallisés" (refroidissement, humidité évaporée).

La prise en masse du sucre finement broyé se distingue donc de la prise en masse due au phénomène bien connu de "maturation" du sucre. Cette "maturation" est évitée en insufflant de l'air sec dans le sucre, soit dans des cellules de maturation avant le stockage en silo, soit dans le silo proprement dit, afin d'éliminer l'eau libérée.

Afin de résoudre ce problème d'agglomération et de prise en masse, appelé phénomène de mottage, du sucre finement broyé, plusieurs techniques qui s'appliquent après le broyage ont été proposées : entre autres, la technique dite "Reimelt" et la technique dite "Bauermeister".

### 1°) Technique Reimelt.

Cette technique fait essentiellement appel au degré d'humidité relative (HR) qui permet qu'une recristallisation se produise à température ambiante lorsque le degré d'humidité est compris entre 35 et 60%. Dans ce cas, l'eau adsorbée est alors utilisée pour augmenter, ainsi que mentionné ci-dessus, la mobilité des structures superficielles amorphes instables et obtenir un réarrangement de la structure.

Il convient de noter que des degrés d'humidité relative plus importants sont à éviter, car dans ces conditions, l'adsorption normale de l'eau est si élevée qu'il existe un risque réel d'agglomération.

De manière pratique, cette technique Reimelt fait appel à un broyage par exemple à l'aide d'un turbobroyeur ou d'un broyeur de type ASIMA qui aspire de l'air à température et humidité contrôlées (taux d'humidité à 33% pour une température de 29°C). Le broyeur ASIMA ® permet de broyer le sucre jusqu'à la granulométrie désirée.

Après le broyage, le sucre est envoyé de manière pneumatique vers une chambre de traitement .Le temps de remplissage est d'environ 5 minutes.

Le traitement consiste à réaliser un passage d'air à température et humidité également contrôlées au travers du sucre broyé pendant un temps déterminé au sein d'un mélangeur appelé "chambre de maturation".

L'opération se réalise de façon discontinue (par "batch"), mais peut être rendue semi-continue par l'utilisation de deux chambres ou mélangeurs travaillant en parallèle.

Dans l'unité de traitement, l'air est tout d'abord asséché par refroidissement afin de pouvoir être ré-humidifié de manière précise jusqu'à obtention d'une humidité relative de 45% tout en maintenant la température à 25 °C.

Le temps du traitement est fixé entre 20 et 30 minutes, et l'air au sein du mélangeur peut atteindre une température de 40 °C et une humidité relative de 23% du fait que le mélange s'effectue avec le sucre broyé à 45 °C.

Ce délai écoulé, le sucre broyé ainsi traité est envoyé vers un silo d'attente avant ensachage.

Les échantillons obtenus par ce procédé semblent être de bonne qualité.

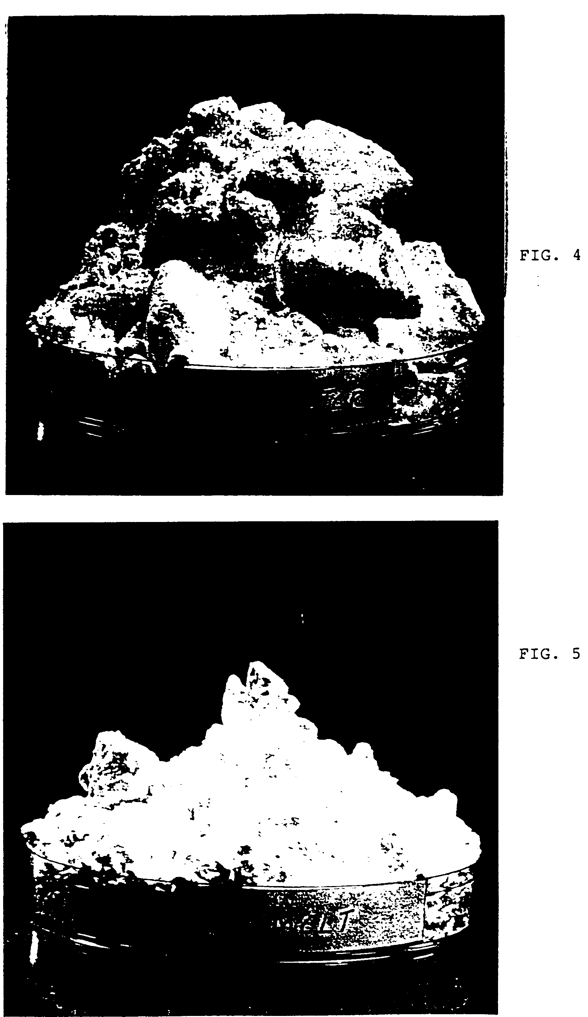

Néanmoins, ils contiennent de petits grumeaux qui peuvent être facilement éliminés au simple toucher (voir également figure 4).

Cependant, leur comportement dans le temps n'est pas satisfaisant. En effet, il est nécessaire, pour pouvoir garantir une durée de stockage supérieure à six mois, de prévoir un double emballage (emballage externe en papier et emballage interne en papier couché PE).

### 2°) Technique Bauermeister.

Cette technique fait appel à l'augmentation de la température jusqu'à une température comprise entre 70 et 80°C qui permet que la recristallisation se produise pour un faible taux d'humidité (inférieur à 15%).

Dans ce cas, on utilise la température pour augmenter la mobilité des structures superficielles amorphes et pour permettre une réarrangement du réseau cristallin.

Il convient néanmoins de noter que l'utilisation de températures élevées provoque un risque de coloration (caramélisation) dans le cas particulier du sucre.

De manière pratique, la technique Bauermeister pourrait faire appel par exemple à un turbobroyeur ou à un broyeur de type ASIMA, pour broyer les cristaux.

Ensuite, le sucre broyé est transporté vers une chambre de traitement qui est essentiellement constituée de trois vis transporteuses.

Le traitement consiste donc à faire passer ce sucre au travers de ces vis transporteuses. Les deux premières sont chauffées au moyen de vapeur à 120°C et ce à contre courant. La troisième vis est refroidie par de l'eau froide à raison de 2 m³ par heure.

La première vis, qui est une vis chauffée, permet d'augmenter la température du sucre broyé jusqu'à une température comprise entre 58 et 65 °C, ceci en 4 à 5 minutes.

La seconde vis permet de maintenir le sucre à une température de 65 °C pendant une période de 4 à 5 minutes.

Enfin, la troisième et dernière vis permet de refroidir le sucre à température ambiante. Cette vis est refroidie à l'aide d'une installation d'eau débitant 0,8 m³ par heure, cette eau étant à une température de 14 °C.

Néanmoins, ce refroidissement n'est pas fondamentalement nécessaire. En effet, il a été prouvé que si le sucre était maintenu à une température supérieure, ceci n'affectait pas sa bonne conservation.

Les deux premières vis sont mises sous aspiration. De manière générale, on note que l'aspiration empêche la formation des poussières dans la salle de production. Selon la forme d'exécution utilisée, les vis tournent lentement (5 tours / min) et elles sont placées en position relevée d'environ 10° dans le sens d'avancement du produit afin de permettre l'évacuation aisée du sucre.

Il convient de noter que si la température des deux premières vis est trop élevée, le sucre risque de caraméliser, et que par conséquent, un contrôle rigoureux de la tempérarure est nécessaire.

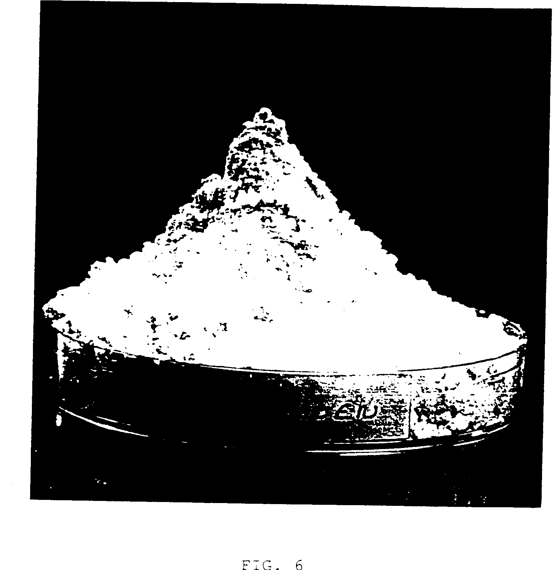

Bien que les échantillons obtenus présentent une granulométrie grossière, ils présentent des grumeaux (voir figure 5).

### Buts de l'invention.

La présente invention vise à proposer un procédé de traitement de matières poudreuses qui permette d'éviter, même à long terme, les problèmes d'agglomération ou de prise en masse des matières poudreuses, c'est-à-dire le phénomène de mottage.

La présente invention vise plus particulièrement à proposer un procédé qui puisse s'appliquer aux matières poudreuses présentant une structure superficielle instable due à une opération préalable, telle qu'un broyage, qui modifie l'arrangement structurel ou la stabilité initiale de la structure.

La présente invention vise en particulier à proposer un procédé qui s'applique aux matières poudreuse présenant une granulométrie faible, et plus particulièrement inférieure à 600 µm.

La présente invention s'applique aussi bien pour les matières organiques telles que le sucre, les antibiotiques en poudre, certains colorants, ... que pour des matières minérales telles que les sels (NaCl, CaCl₂, KCl), le ciment, le verre pilé, ... .

### Principaux éléments caractéristiques de la présente invention.

La présente invention se rapporte à un procédé de traitement de matières poudreuses sensibles à des phénomènes de mottage, caractérisé en ce que l'on soumet ces matières poudreuses à un traitement par micro-ondes.

La présente invention se rapporte plus particulièrement à des matières poudreuses présentant une structure superficielle instable due à une opération préalable qui modifie leur arrangement structurel superficiel ou la stabilité initiale de leur structure.

En effet, du fait de cette opération préalable, les matières poudreuses présenteront une structure superficielle instable qui aura tendance naturellement à se réarranger et à libérer de l'eau, ce qui provoque l'agglomération et la prise en masse des particules poudreuses entre elles. De préférence, l'opération préalable qui a modifié l'arrangement structurel superficiel ou la stabilité initiale de la structure des matières poudreuses est un broyage.

La présente invention s'applique plus particulièrement à un procédé de traitement de matières poudreuses présentant une faible granulométrie, de préférence inférieure à 600 µm.

La présente invention s'applique aussi bien pour les matières organiques telles que le sucre, les antibiotiques en poudre, les colorants, ... que pour des matières minérales telles que les sels (NaCl, CaCl₂, KCl), le ciment, la zéolite, le verre pilé, ... .

De manière avantageuse, les matières poudreuses sont cristallines et présentent une structure superficielle amorphe.

L'application du procédé selon l'invention à de telles matières poudreuses permet de provoquer le réarrangement des structures superficielles amorphes vers une structure plus stable.

La présente invention se rapporte particulièrement à un procédé de traitement de sucre broyé très finement appelé "sucre glacé" ou "sucre impalpable", en vue d'éviter tout phénomène de mottage de ce sucre, même à long terme.

Selon une forme d'exécution encore préférée, il convient de prévoir également un système d'aération ou d'évacuation de l'humidité lors de l'opération de traitement par micro-ondes.

De préférence, la durée du traitement par micro-ondes est comprise entre 2 et 3 minutes.

D'autre part, afin d'obtenir une efficacité assez élevée, il importe que l'épaisseur de la couche de matières poudreuses n'excède pas la longueur d'onde des micro-ondes.

En Europe, où la fréquence minimale admise des micro-ondes est de 2450 MHz, l'épaisseur de la couche de matière poudreuse est inférieure à 15 cm et est de préférence limitée à 12 cm.

Dans des pays où des fréquences plus basses sont admises, par exemple 215 MHz, la pénétration des micro-ondes est plus forte et l'épaisseur de la couche de matière poudreuse peut être augmentée en conséquence.

Selon une forme d'exécution préférée, on prévoit d'effectuer ce traitement en continu, le four à micro-ondes étant pourvu d'un sas d'entrée et d'un sas de sortie, le produit étant amené au sein du four à micro-ondes par l'intermédiaire d'une bande transporteuse.

Un autre aspect de la présente invention concerne la matière poudreuse non agglomérée obtenue par le procédé ou par le dispositif selon l'invention, caractérisée en ce que plus de 97 %, de préférence plus de 98 %, de ses particules possèdent une granulométrie inférieure à 140 µm et/ou moins de 3 %, de préférence moins de 2 %, de ses particules possèdent une granulométrie supérieure à 180 µm.

Un dernier aspect de la présente invention concerne l'utilisation du procédé ou du dispositif selon l'invention pour un traitement de matières organiques telles que le sucre, et en particulier le sucre glacé ou impalpable, les antibiotiques en poudre, les colorants organiques en poudre, la zéolite, ..., ou de matières minérales telles que des sels minéraux (NaCl, CaCl₂, Kcl), le ciment, le verre pilé, ...

### Brève description des figures.

- La figure 1: représente la courbe d'adsorption du sucre ayant subi une opération qui rend instable sa structure cristalline.
- La figure 2: représente les courbes d'adsorption du sucre selon les diverses méthodes de traitement proposées.
- La figure 3: représente un schéma d'une installation destinée à la mise en oeuvre du procédé selon l'invention.
- Les figures 4, 5 et 6: représentent des photos de sucre glacé ou impalpable soumis au procédé de traitement selon la technique Reimelt (figure 4), selon la technique Bauermeister (figure 5) et selon la présente invention (figure 6).

### Description d'une forme d'exécution préférée.

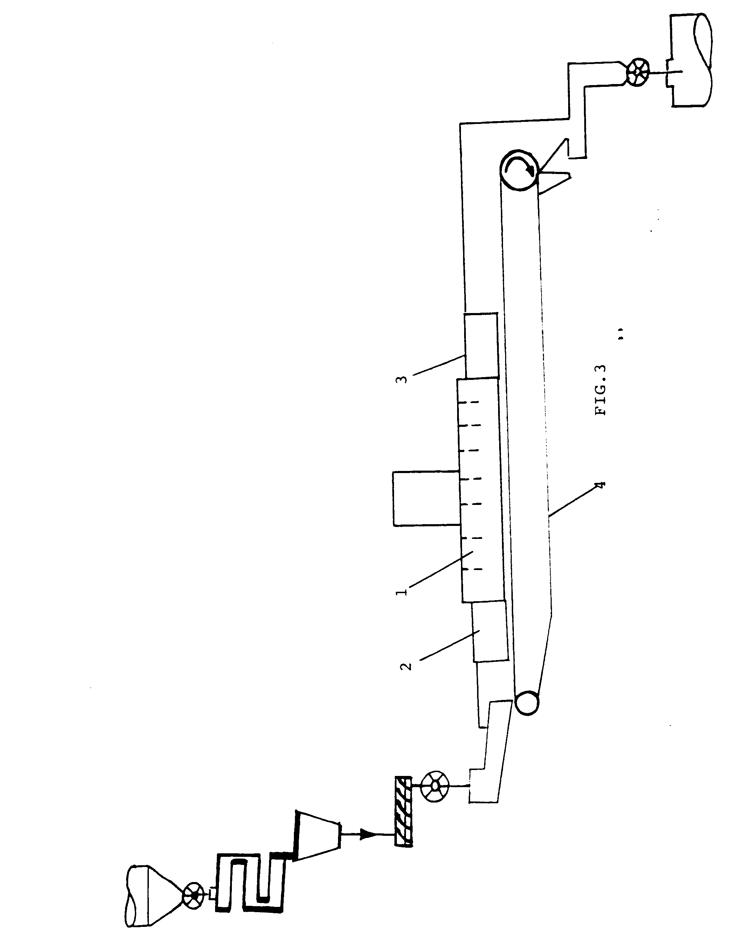

La présente invention sera décrite en se référant à la figure 3 annexée, dans laquelle une installation de traitement pour la mise en oeuvre du procédé selon la présente invention est représentée.

Cette installation comprend essentiellement des appareils à micro-ondes de type relativement classique et convenant pour effectuer une opération de conditionnement en vue d'éviter tout phénomène d'agglomération et de prise en masse des matières poudreuses.

L'installation sera décrite pour une application particulière qui est celle du traitement du sucre broyé très finement et appelé "sucre glacé" ou "sucre impalpable", et dans lequel aucun additif n'a été ajouté.

Ce sucre est de préférence du sucre broyé blanc ou raffiné, ne comprenant aucun additif, c'est-à-dire qu'il est composé de saccharose cristallisée et purifiée présentant au moins les caractéristiques de la catégorie numéro 3 de la CEE.

Le sucre dit glacé ou impalpable comprend de préférence plus de 97%, et de préférence plus de 98%, de particules ayant une granulomértie inférieure à 140 µm et/ou moins de 3%, et de préférence moins de 2%, de ses-particules ayant une granulométrie supérieure à 180 µm.

L'installation comprend un ou plusieurs modules 1, chaque module 1 comprenant :
- 24 cavités micro-ondes dans laquelle les matières poudreuses sont traitées,
- 24 générateurs micro-ondes ou magnétrons destinés à produire les micro-ondes.

Chaque magnétron a une puissance nominale de 800 Watts générant des ondes à une fréquence de 2450 MHz et comprend un système de ventilation.

Le magnétron requiert en outre un courant de chauffage et un courant de haute tension.

Afin de pouvoir effectuer le procédé en continu, on prévoit un sas d'entrée 2 et un sas de sortie 3 étanches au rayonnement électro-magnétique qui permettent l'introduction et l'enlèvement des matières poudreuses.

De préférence, on prévoit également que les matières poudreuses seront transportées à l'aide d'une bande transporteuse 4 ou d'un convoyeur à vis en matériau neutre et perméable aux micro-ondes entre le sas d'entrée 2 et le sas de sortie 3 au sein de la cavité micro-ondes.

Il convient de noter que l'onde, qui présente une longueur d'onde de 12,24 cm dans le présent cas, commence à s'atténuer dès qu'elle pénètre dans les matières poudreuses à traiter, et que cette atténuation est exponentielle. De ce fait, il est nécessaire, en vue d'obtenir un traitement relativement homogène, que l'épaisseur des matières poudreuses disposées sur la bande transporteuse ne soit pas trop élevée et soit de préférence comprise entre 10 et 15 cm, le meilleur rendement étant obtenu avec une épaisseur de matières poudreuses inférieure à 12 cm.

On observe que le temps d'exposition aux micro-ondes est de 2 minutes en moyenne, et que la température d'entrée est comprise entre 42 et 45 °C, tandis que la température de sortie n'aura pas augmenté de manière trop importante; elle est en effet maintenue à une température comprise entre 50 et 55 °C. Ceci permet avantageusement d'éviter les problèmes de coloration (caramélisation, dans l'exemple particulier d'application au sucre).

Il convient de noter que la température d'entrée est dans le présent cas déterminée par le type et la durée du broyage. De manière générale, on observe que la température de sortie a augmenté d'environ 10 °C par rapport à la température d'entrée.

Ceci signifie que, de manière avantageuse, il n'est pas nécessaire de prévoir un contrôle précis des températures d'entrée et de sortie, celles-ci ayant une influence relativement faible sur le traitement par micro-ondes et en particulier sur sa durée.

Aux figures 4, 5 et 6, on a représenté des échantillons de sucre présentant essentiellement une même granulométrie traités par les trois procédés de traitement :
1°) procédé Reimelt (figure 4),
2°) procédé Bauermeister (figure 5),
3°) procédé micro-ondes (figure 6).

On observe qu'après avoir subi un traitement, le sucre traité par micro-ondes présente un comportement amélioré comparé à celui traité par les deux procédés selon l'état de la technique.

D'autre part, on a décrit précisément au tableau 1 la granulométrie selon les standards courants des trois échantillons décrits dans les figures 4, 5 et 6.

Selon la présente invention, les échantillons de sucre traités ont été, selon le procédé Reimelt et le procédé micro-ondes, broyés à l'aide d'un broyeur ASIMA, et selon le procédé Bauermeister, broyés à l'aide d'un turbobroyeur et présentant une granulométrie supérieure à celle obtenue à l'aide d'un broyeur ASIMA (voir tableau 1).

**Tableau 1.**

| Granulométrie | Echantillon 1 selon procédé Reimelt | Echantillon 2 selon procédé Bauermeister | Echantillon 3 selon procédé micro-ondes |
|---|---|---|---|
| % > 250 µm | 0,7 | 1,85 | 0,25 |
| % > 180 µm | 2,6 | 4,44 | 1,1 |
| % < 140 µm | 95,5 | 93,5 | 98,2 |

On remarque que bien que la granulométrie de l'échantillon 2 utilisé selon le procédé Bauermeister reste supérieure à celle des échantillons 1 et 3 utilisés respectivement selon le procédé Reimelt et le procédé selon la présente invention, les résultats, et en particulier le phénomène de mottage, restent particulièrement importants dans ce cas.

Le tableau 2 représente un quatrième échantillon traité à nouveau selon le procédé micro-ondes et présentant une granulométrie quelque peu différente, exprimée en fractions passantes.

**Tableau 2.**

| Granulométrie | Echantillon 4 selon procédé micro-ondes |
|---|---|
| % < 200 µm | 100 |
| % < 70 µm | 90 |
| % < 50 µm | 80 |
| % < 25 µm | 50 |

Aux tableaux 3 et 4, on a tenté de donner une évaluation ou appréciation d'un point de vue prise en masse (tableau 3) et d'un point de vue fluidité (tableau 4) pour les différents échantillons décrits ci-dessus après les avoir stockés pour une période de trois mois à température et taux d'humidité variables selon la saison.

**Tableau 3.**

| Echantillon 1 | Echantillon 2 | Echantillon 3 | Echantillon 4 |
|---|---|---|---|
| présence dans la masse de petits grumeaux qui s'éliminent sous la pression | présence dans la masse de petits grumeaux ainsi que de gros grumeaux qui s'éliminent sous une légère pression | absence totale de grumeaux | absence totale de grumeaux |

**Tableau 4.**

| Echantillon 1 | Echantillon 2 | Echantillon 3 | Echantillon 4 |
|---|---|---|---|
| mauvaise; inférieure à celle obtenue avec présence d'anti-agglomérants | mauvaise; inférieure à celle obtenue avec présence d'anti-agglomérants | égale ou supérieure à celle obtenue avec présence d'anti-agglomérants | égale ou supérieure à celle obtenue avec présence d'anti-agglomérants |

D'après les données des tableaux 3 et 4, on observe aisément que le comportement d'un produit traité par micro-ondes est nettement supérieur à celui d'un produit traité par les procédés selon l'état de la technique.

Au tableau 5, on a comparé différents paramètres pour les trois techniques précitées.

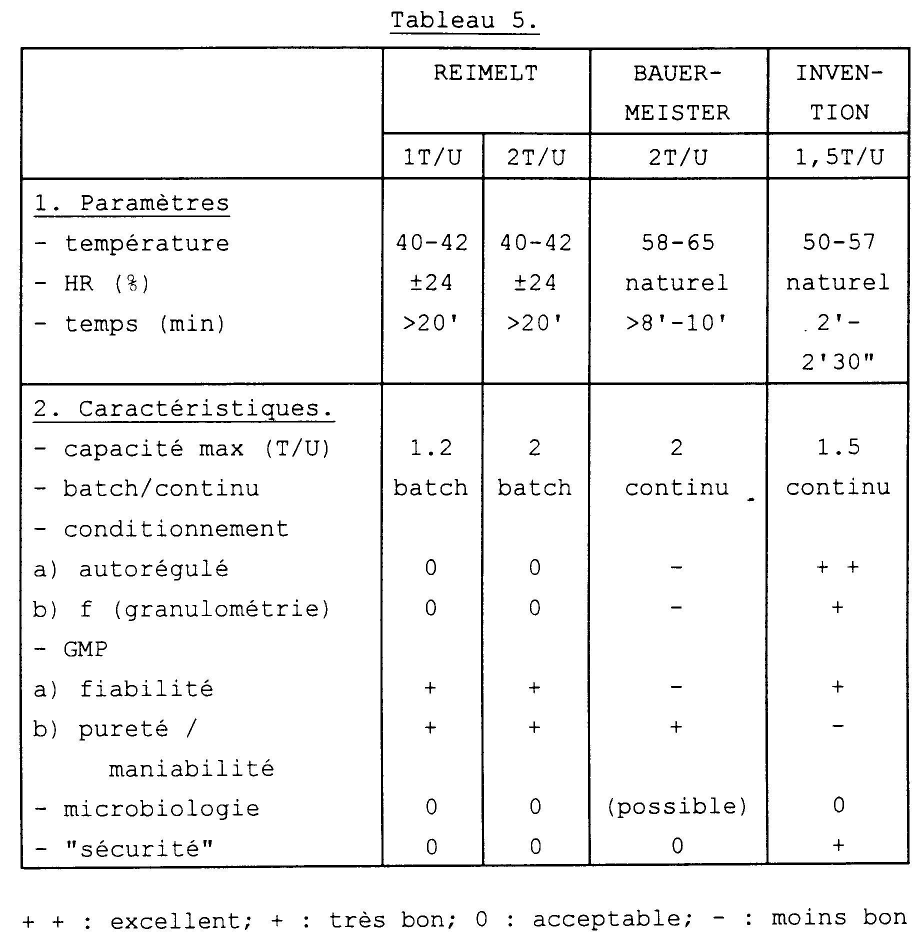

On observe que la technique micro-ondes et la technique de Reimelt se montrent, d'un point de vue technologique, plus ou moins équivalentes. Néanmoins, la technique utilisant le procédé selon la présente invention présente l'avantage relatif d'être plus flexible (autorégulation, meilleur comportement pour les granulométries fines et en termes de microbiologie). Le seul inconvénient qu'elle pourrait présenter est une consommation légèrement plus élevée en énergie.

Tandis que les variations de la température et du taux d'humidité relative doivent être précisément contrôlées selon les procédés Reimelt et Bauermeister, il n'en est pas de même pour ce qui concerne le procédé micro-ondes.

En particulier, selon le procédé de la présente invention, il n'est pas indispensable d'avoir un contrôle précis de la température d'entrée des matières poudreuses et de contrôler le taux d'humidité relative.

Dans les différents exemples qui suivent, on a traité diverses matières poudreuses dans un four ménager possédant une seule cavité (800 W, 2450 MHz) pendant un temps d'exposition de 2 à 3 minutes. Le four ménager possède également un système de ventilation. Le traitement des diverses matières s'est fait sous forme de "batch" (non continu).

Les matières ont été disposées dans le four micro-ondes sous forme d'un petit tas présentant une hauteur de 7 à 10 cm.

Les matières ont été soumises préalablement à un broyage afin de réduire la granulométrie du produit initial.

De manière générale, le résultat est que les poudres traitées selon le procédé de traitement par micro-ondes sont légères, plus fluides, et présentent un aspect amélioré, en particulier dans le temps, en comparaison avec les mêmes produits broyés n'ayant pas subi le procédé selon la présente invention.

A titre d'exemple, on peut citer le chlorure de calcium pour lequel on observe, dans le cas d'un premier échantillon de matière n'ayant pas subi le procédé selon la présente invention, une prise en masse progressive dans le fond du récipient qui le contient. Par contre, dans le cas d'un second échantillon de matière qui a subi le traitement de traitement par micro-ondes, on observe après quatre semaines qu'il n'y a toujours pas de grumeaux formés et que la fluidité de la matière reste supérieure à celle de la partie non prise en masse du premier échantillon.

On observe des résultats comparables avec d'autres sels, tels que le NaCl et le KCl.

On a également testé le procédé selon la présente invention pour des produits tels que :
- le ciment aggloméré et broyé,
- les colorants organiques ou non en poudre,
- la zéolite,
- les antibiotiques,
- le bicarbonate de soude,
- le soufre qui est directement traité par micro-ondes lors de sa préparation en poudre,
- l'amidon,
- le verre finement broyé (matière amorphe).

On a soumis chaque fois deux échantillons présentant la même granulométrie d'une part à un traitement selon le procédé de la présente invention, et d'autre part à aucun traitement.

On observe dans tous les cas que les produits traités par le procédé selon la présente invention présentent une amélioration (absence de grumeaux ou de prise en masse) comparés aux échantillons qui n'ont pas subi le traitement selon la présente invention.

## Revendications

1. Procédé de traitement de matières poudreuses sensibles à des phénomènes de mottage, caractérisé en ce que l'on soumet ces matières poudreuses à un traitement par micro-ondes.

2. Procédé selon la revendication 1, caractérisé en ce que les matières poudreuses présentent une structure superficielle instable due à une opération préalable qui modifie leur arrangement structurel superficiel ou la stabilité initiale de leur structure.

3. Procédé selon la revendication 2, caractérisé en ce que l'opération préalable est un broyage.

4. Procédé selon l'une quelconque des revendications précédentes, caractérisé en ce que les matière poudreuses présentent une granulométrie faible, de préférence inférieure à 600 µm.

5. Procédé selon l'une quelconque des revendications précédentes, caractérisé en ce que les matières poudreuses sont cristallines et présentent une structure superficielle amorphe.

6. Procédé selon l'une quelconque des revendications précédentes, caractérisé en ce que les matières poudreuses sont préparées à partir de matières premières exemptes d'humidité sous forme d'eau libre.

7. Procédé selon l'une quelconque des revendications précédentes, caractérisé en ce qu'un système d'évacuation de l'humidité libérée par le traitement par micro-ondes est prévu.

8. Procédé selon l'une quelconque des revendications précédentes, caractérisé en ce que la durée du traitement par micro-ondes est comprise entre 2 et 3 minutes.

9. Procédé selon l'une quelconque des revendications précédentes, caractérisé en ce que l'épaisseur de la couche de matières poudreuses n'excède pas la longueur d'onde des micro-ondes.

10. Procédé selon l'une quelconque des revendications précédentes, caractérisé en ce que le traitement s'effectue en continu.

11. Dispositif pour la mise en oeuvre du procédé selon l'une quelconque des revendications précédentes, caractérisé en ce qu'il comprend :
un ou plusieurs modules, chaque module comprenant :
- au moins une cavité micro-ondes dans laquelle les matières poudreuses sont traitées,
- au moins un générateur micro-ondes ou magnétron destiné à produire les micro-ondes.

12. Dispositif selon la revendication 11, caractérisé en ce que la couche de matières poudreuses disposée dans la cavité micro-ondes présente une épaisseur qui n'excède pas la longueur d'onde des micro-ondes.

13. Dispositif selon la revendication 11 ou 12, caractérisé en ce que un sas d'entrée (2) et un sas de sortie (3) étanches au rayonnement micro-ondes sont prévus pour permettre l'introduction et l'enlèvement des matières poudreuses, ainsi qu'une bande transporteuse (4) ou un convoyeur à vis pour transporter les matières entre le sas d'entrée (2) et le sas de sortie (3) au sein de la cavité micro-ondes.

14. Dispositif selon l'une quelconque des revendications 11 à 13, caractérisé en ce qu'il possède un dispositif de ventilation.

15. Matière poudreuse non agglomérée, obtenue par le procédé selon l'une quelconque des revendications 1 à 10 ou par le dispositif selon l'une quelconque des revendications 11 à 14, caractérisée en ce que plus de 97 %, de préférence plus de 98 %, de ses particules possèdent une granulométrie inférieure à 140 µm et/ou moins de 3 %, de préférence moins de 2 %, de ses particules possèdent une granulométrie supérieure à 180 µm.

16. Utilisation du procédé selon l'une quelconque des revendications 1 à 10 ou du dispositif selon l'une quelconque des revendications 11 à 14 pour un traitement de matières organiques telles que le sucre, et en particulier le sucre glacé ou impalpable, les antibiotiques en poudre, les colorants organiques en poudre, la zéolite ou de matières minérales telles que des sels minéraux (NaCl, CaCl₂, KCl), le ciment, le verre pilé.
